# EUROPÄISCHE PATENTSCHRIFT

(11) **EP 2 764 802 B1**
(45) Veröffentlichungstag und Bekanntmachung des Hinweises auf die Patenterteilung: **06.04.2016**
(21) Anmeldenummer: 14153379.4
(22) Anmeldetag: 31.01.2014
(51) Int. Cl.: A47J 31/36

(54) **Kaffeevollautomat mit schwenkbarer Brühkammer und Abstreifer**
Fully automatic coffee machine with swiveling brewing chamber and scraper blade
Machine à café entièrement automatique dotée d'une chambre à infusion pivotante et d'un déflecteur

(30) Priorität: 08.02.2013 DE 102013202152
(43) Veröffentlichungstag der Anmeldung: 13.08.2014
(73) Patentinhaber: BSH Hausgeräte GmbH, 81739 München (DE)
(72) Erfinder: Eder, Florian, 83132 Pittenhart (DE); Haslacher, Christian, 5303 Thalgau (AT); Huber, Michael, 6341 Ebbs (AT); Strobl, Robert, 83246 Unterwössen (DE)

(56) Entgegenhaltungen:
- DE-U1- 9 115 998

## Beschreibung

Die Erfindung betrifft einen Kaffeevollautomaten, insbesondere für Haushaltszwecke, umfassend eine Spindelbrüheinheit mit einer Brühkammer und einer Gewindespindel als Antrieb der Brühkammer, wobei die Brühkammer parallel zu einer Drehachse der Gewindespindel verfahrbar und um eine Drehachse der Gewindespindel verschwenkbar ist, und mit einer Abstreifvorrichtung zum Abstreifen eines Tresterkuchens von der Brühkammer. Die Spindelbrüheinheit derartiger Kaffeevollautomaten umfasst regelmäßig einen Kolben, der in die Brühkammer (genauer: Brühzylinder) eingefahren werden kann. Die dafür notwendige Bewegung der Brühkammer bzw. des Kolbens relativ zueinander kann von der Gewindespindel erzeugt werden, die ein Motor antreibt.

Einen Kaffeevollautomaten mit einer Abstreifvorrichtung offenbart die DE 9 115 998 U1. Sie zeigt eine um eine Drehachse der Gewindespindel verschwenkbare Abstreifvorrichtung, die durch ein Verfahren der Brühkammer über eine Kulissenführung angetrieben wird. Die Aktivierung der Abstreifvorrichtung erfolgt auf einem vertikalen Verfahrweg der Brühkammer.

Der Erfindung liegt die Aufgabe zugrunde, einen Kaffeevollautomaten hinsichtlich seiner Brüheinheit zu vereinfachen und seine Abmessungen zu verringern.

Diese Aufgabe wird durch einen Kaffeevollautomaten gemäß Oberbegriff mit den in Anspruch 1 angegebenen Merkmalen gelöst. Der eingangs genannte Kaffeevollautomat wird dazu erfindungsgemäß durch Mittel weitergebildet, die ein Verschwenken der Brühkammer ermöglichen und ein Abstreifen des Tresterkuchens weitgehend zeitgleich zum Verschwenken der Brühkammer bewirken. Die Erfindung wendet sich also davon ab, das Abstreifen bei einem Verfahren der Brühkammer z. B. mittels einer Kulissenführung zu bewirken. Sie verfolgt vielmehr das Prinzip, das Verschwenken der Brühkammer selbst zum Abstreifen zu nutzen, indem das Verschwenken als eine Relativbewegung gegenüber der Abstreifvorrichtung dient. Ihr gelingt mit der Entkoppelung des Abstreifens von einer Vertikalbewegung der Brühkammer, einen vertikalen Verfahrweg der Brühkammer einzusparen, so dass die Bauhöhe der Brüheinheit reduziert werden kann. Die erzielte Platzersparnis ermöglicht geringere Abmessungen des Kaffeevollautomaten.

Das Verschwenken der Brühkammer um die Spindelachse kann in einer Ebene orthogonal zur Spindelachse erfolgen, also eine reine Rotationsbewegung sein. Insofern wird auf die Anmeldungen Nr. 201203693 und Nr. 201203225 des Anmelders vom selben Tage verwiesen, die eine derartige Brüheinheit zeigen und deren Lehre mit der vorliegenden Erfindung kombiniert werden kann. Die Rotationsbewegung ist aber erfindungsgemäß nicht zwingend erforderlich. Auch eine kombinierte Bewegung aus einem Verschwenken und einem Verfahren und damit eine dreidimensionale Bewegung ist möglich, wobei sich die Beschreibung im Folgenden der Einfachheit halber nur auf den horizontalen Anteil der dreidimensionalen Bewegung, also auf das Verschwenken bezieht. Die Gewindespindel kann relativ zu einer Aufstandsfläche des Kaffeevollautomaten senkrecht oder um bis zu etwa 50° gegenüber der Vertikalen geneigt in dessen Gehäuse stehen. Unter dem weitgehend zeitgleichen Abstreifen der Abstreifvorrichtung einerseits und Verschwenken der Brühkammer andererseits ist zu verstehen, dass beide Vorgänge entweder unmittelbar gleichzeitig oder mit geringem zeitlichem Versatz, aber zeitlich überlappend erfolgen können.

Die Brühkammer wird im Laufe eines Zubereitungsvorgangs verschwenkt, beispielsweise um sie mit frischem Kaffeepulver zu beschicken. Nach einer vorteilhaften Ausführungsform der Erfindung kann die Abstreifvorrichtung relativ zur Verschwenkbewegung der Brühkammer ortsfest angeordnet sein. Das Abstreifen des Tresterkuchens erfolgt demgemäß durch das Verschwenken der Brühkammer gegenüber der feststehenden Abstreifvorrichtung. Die Abstreifvorrichtung ist daher als ein Widerstand für den an der Oberseite der Brühkammer ausgefahrenen Tresterkuchen ausgebildet, der unmittelbar dort wirkt und der ein Mitverschwenken des Tresterkuchens mit der Brühkammer verhindert. Der Abstreifer schiebt ihn dann seitlich von der Oberseite der Brühkammer ab, sodass er z.B. auf eine Rutsche oder direkt in einen Tresterbehälter fällt. Die Abstreifvorrichtung kann z. B. als Balken oder Schild ausgebildet und durch eine Bogenkontur an die zylindrische Form des Tresterkuchens angepasst sein. Grundsätzlich kann die ortsfeste Abstreifvorrichtung gehäusefest ausgebildet sein, die Brühkammer also unter ihr hindurch schwenken, um den Tresterkuchen abzustreifen. Alternativ dazu kann sich die Abstreifvorrichtung mit der vertikalen Verfahrbewegung der Brühkammer mitbewegen, da sie lediglich relativ zur Verschwenkbewegung der Brühkammer ortsfest angeordnet sein muss. Die erfindungsgemäße Abstreifvorrichtung bietet den Vorteil, dass sie konstruktiv sehr einfach und raumeffizient zu realisieren ist. Sie benötigt keinen separaten Antrieb, sondern lässt sich allein durch die Verschwenkbewegung der Brühkammer aktivieren.

Nach einer dazu alternativen Ausgestaltungsform der Erfindung kann die Abstreifvorrichtung nicht in einer horizontalen Richtung feststehend, sondern vielmehr separat antreibbar sein. Die Abstreifvorrichtung verfügt folglich über einen eigenen Antrieb, so dass sie grundsätzlich sowohl mechanisch als auch zeitlich unabhängig von der Verschwenkbewegung der Brühkammer wirken kann. Die angetriebene Abstreifvorrichtung kann in einer horizontalen Ebene an der Oberseite der Brühkammer translatorisch verfahrbar oder wie die Brühkammer selbst koaxial oder parallel zur Spindelachse verschwenkbar gelagert sein. Damit kann der Abstreifvorgang flexibler in den Brühvorgang eingepasst werden. Eine zumindest teilweise zeitliche Überlappung der Verschwenkbewegung der Brühkammer einerseits und der Abstreifvorrichtung andererseits bietet jedoch den Vorteil, einen schnelleren Abstreifvorgang zu ermöglichen.

Grundsätzlich kann die Abstreifbewegung der Verschwenkbewegung gleich- oder entgegengesetzt gerichtet verlaufen. Bei einer Gleichrichtung muss die Abstreifvorrichtung schneller bewegt werden als die Brühkammer. Vorzugsweise kann die Abstreifvorrichtung daher in einer gegenläufigen Bewegung zur Verschwenkbewegung der Brühkammer antreibbar sein. Damit verlaufen die Verschwenkbewegung der Brühkammer einerseits und Bewegung der Abstreifvorrichtung andererseits scherenartig zueinander in parallelen Ebenen. Jede der einander entgegengesetzt verlaufenden Bewegungen für sich erfordern damit vorteilhafterweise einen nur relativ kurzen Weg, um gemeinsam den Tresterkuchen abzustreifen. Ein kurzer Weg der Bewegungen bedeutet einen geringen Raumbedarf der bewegten Brühkammer einerseits und der Abstreifvorrichtung andererseits, wodurch die Brüheinheit sehr kompakt ausgebildet werden kann.

Ein Schwenkwinkel der Brühkammer und der Abstreifvorrichtung relativ zueinander kann mindestens 30°, vorzugsweise mindestens 40° bis 50° und besonders bevorzugt mindestens 80° bis 90° betragen sowie höchstens 180° bis 160°, vorzugsweise höchstens 150 bis 130° und besonders bevorzugt höchstens 120° bis 100° betragen. Die jeweiligen Schwenkwinkel der Brühkammer und der Abstreifvorrichtung können dazu identisch oder unterschiedlich sein. Unterschiedliche Schwenkwinkel können beispielsweise mittels einer geeigneten Unter- oder Übersetzung durch eine Koppelungseinrichtung zwischen der Brühkammer und der Abstreifvorrichtung realisiert werden. Bei einem Ausschwenken der Brühkammer ab etwa 80°können ggf. zusätzliche Stabilisierungsmittel der Brüheinheit erforderlich werden.

Grundsätzlich muss die Abstreifvorrichtung jedenfalls zu demjenigen Zeitpunkt an der Oberseite der Brühkammer wirken, zu dem der Tresterkuchen vollständig ausgefahren ist. Im Übrigen darf sie die Bewegung und Funktion der Brühkammer nicht beeinträchtigen. Nach einer vorteilhaften Ausgestaltung der Erfindung kann die Abstreifvorrichtung unmittelbar an der Brühkammer angeordnet sein. Sie kann insbesondere an einer Oberseite der Brühkammer geführt oder angeordnet sein, so dass sie auch bei einer Verfahrbewegung der Brühkammer mit ihr verfahren wird. Eine nicht separat angetriebene Abstreifvorrichtung darf allerdings nicht verschwenkbar angebracht sein, sondern muss beim Verschwenken der Brühkammer beispielsweise durch einen Anschlag festgehalten werden. Eine separat angetriebene Abstreifvorrichtung dagegen kann hinsichtlich ihrer horizontalen Bewegungsrichtung und Bewegungsgeschwindigkeit unabhängig von der Verschwenkung der Brühkammer bewegt werden. Eine derartige Positionierung bietet den Vorteil, dass sie eine Koordination der Bewegungen der Abstreifvorrichtung einerseits und der Brühkammer andererseits bezüglich ihrer vertikalen Komponente vereinfacht und geringere Toleranzprobleme bietet, so dass sich der konstruktive Aufwand verringert. Daraus kann eine leichtere Zugänglichkeit der Brühkammer, z. B. zu Reinigungszwecken resultieren.

Grundsätzlich kann der Abstreifvorrichtung ein separater Antrieb zugeordnet sein, z. B. ein Elektromotor oder ein Federmechanismus, der beim vertikalen Verfahren der Brühkammer vorgespannt und bei ihrem Verschwenken betätigt bzw. ausgelöst wird. Nach einer weiteren vorteilhaften Ausgestaltung der Erfindung kann die Brüheinheit eine mechanische Koppelungseinrichtung umfassen, die das Bewegen der Abstreifvorrichtung mit der Verschwenkbewegung der Brühkammer koppelt. Damit kann die Abstreifvorrichtung mechanisch unmittelbar an die Gewindespindel oder an die Brühkammer gekoppelt sein. Bei der Bewegung der Abstreifvorrichtung kann es sich um eine translatorische Verschiebebewegung oder um eine ebenfalls rotatorische Verschwenkbewegung vorzugsweise um eine zur Spindelachse parallele oder deckungsgleiche Achse handeln. Die rotatorische Verschwenkbewegung lässt sich ggf. mechanisch einfacher umsetzen. Zum Beispiel kann der Abstreifvorrichtung, die auf der Oberseite der Brühkammer verschwenkbar gelagert ist, ein gehäusefester Anschlag zugeordnet sein. Nur beim Verschwenken der Brühkammer relativ zum Gehäuse trifft er auf einen Hebel der Abstreifvorrichtung und lenkt sie relativ zur Brühkammer aus. Die Koppelungseinrichtung bietet grundsätzlich den Vorteil, dass sie selbst bereits eine geeignete Koordination der Bewegungen der Abstreifvorrichtung einerseits und der Brühkammer andererseits sicherstellt.

Prinzipiell kann auch die Gewindespindel die Abstreifvorrichtung antreiben. Nach einer bevorzugten Ausgestaltung der Erfindung kann die Koppelungseinrichtung zum Aktivieren der Abstreifvorrichtung an der Verschwenkbewegung der Brühkammer ankoppeln, die Bewegung der Abstreifvorrichtung also unmittelbar und gehäuseunabhängig mit der Verschwenkbewegung der Brühkammer verknüpfen. Die Koppelungseinrichtung vollzieht damit eine Kraftumlenkung von einer Rotationsbewegung der Brühkammer in eine vorzugsweise entgegengesetzte Bewegung der Abstreifvorrichtung. Die Koppelungseinrichtung kann als Kulisse, als Seilzug-, Zahnrad- oder Hebelgetriebe ausgebildet sein. Als Zahnradgetriebe kann ein Kronrad-, Kegelrad-, Planeten- oder Schneckengetriebe dienen. Sowohl die Kulisse als auch die Getriebe können ein geeignetes Unter- bzw. Übersetzungsverhältnis des Antriebs des Abstreifelements bereitstellen. Das Zahnradgetriebe bietet den Vorteil, dass es keine Schlupfverluste bei der Drehmomentübertragung und nur geringe Reibungsverluste bietet.

Nach einer weiteren vorteilhaften Ausgestaltung der Erfindung kann die Abstreifvorrichtung einen um die Spindel gelegten Haltering umfassen, der zum Verschwenken bzw. Rotieren antreibbar ausgebildet ist. Der Haltering der Abstreifvorrichtung kann auf der Oberseite der Brühkammer aufliegen. Eine Lagerung der Abstreifvorrichtung koaxial zur Spindelachse erspart eine separate Lagerung und begünstigt damit eine konstruktive Einfachheit der Spindelbrüheinheit.

Gemäß einer bevorzugten Ausführungsform kann die Koppelungseinrichtung eine erste Zahnstange an der Brühkammer und eine zweite Zahnstange an der Abstreifvorrichtung sowie ein Zahnrad zwischen beiden Zahnstangen umfassen, das mit beiden Zahnstangen kämmt. Die Abstreifvorrichtung kann ihre Zahnstange am Haltering aufweisen. Die erste und die zweite Zahnstange weisen jeweils eine geeignete Länge zum Abrollen auf dem Zahnrad auf, die von dem maximalen Schwenkwinkel der Brühkammer einerseits und des Abstreifelements andererseits bestimmt wird. Kämmen die Zahnstangen nicht mit dem selben Zahnrad, sondern mit jeweils einem eigenen, das mit dem anderen drehfest auf derselben Achse liegt, aber einen abweichenden Umfang aufweist, kann eine Übersetzung erzeugt werden.

Die Zahnstangen sind jeweils segmentbogenförmig um die Spindelachse gebogen ausgebildet, da sie um die Spindelachse mit verschwenken, und wirken damit wie feststehende Kreisbogenabschnitte von Kronrädern. Das in dieser Ausgestaltung als Stirnrad ausgeführte Zahnrad ist drehbar und lediglich entlang der Gewindespindel verfahrbar, aber nicht verschwenkbar gelagert. Seine Achse kann einen Endes mittels eines Rings drehbar auf der Gewindespindel gelagert sein und anderen Endes in einer vertikalen Nut in einem Gehäuse oder Rahmen der Brüheinheit und entlang der Spindel geführt werden. Das erfindungsgemäße Stirnradgetriebe bzw. Kronradgetriebe bewirkt damit ein gegenläufiges Verschwenken des Abstreifelements zum Verschwenken der Brühkammer. Es bietet die Vorteile einer zuverlässigen, raumeffizienten und kostengünstigen Koppelungseinrichtung.

Das Prinzip der Erfindung wird im Folgenden anhand einer Zeichnung beispielshalber noch näher erläutert. Es zeigen
- Figur 1:: einen schematischen Vertikalschnitt durch einen Kaffeevollautomaten,
- Figur 2a:: eine schematische Seitenansicht einer Abstreifvorrichtung an einer Gewindespindel, dargestellt in einer ersten Position,
- Figur 2b:: eine Schnittansicht der Abstreifvorrichtung nach Fig. 2a in einer Draufsicht,
- Figur 3a:: eine mit Fig. 2a vergleichbare Seitenansicht der Abstreifvorrichtung in einer zweiten Position,
- Figur 3b:: eine mit Fig. 2b vergleichbare schematische Schnittansicht in der zweiten Position.

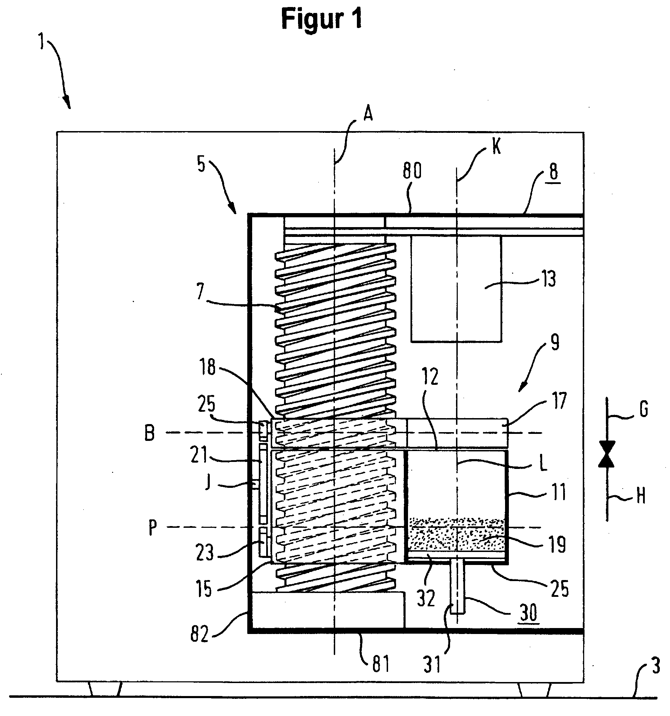

Figur 1 zeigt überblicksartig einen schematischen Vertikalschnitt durch einen Kaffeevollautomaten 1, der auf einer horizontalen Aufstandsfläche 3 steht, zum Beispiel einer Küchenarbeitsplatte. Im Kaffeevollautomaten 1 ist eine Spindelbrüheinheit 5 angeordnet, die ein C-förmiger Aufnahmerahmen 8 umgibt. Er besteht aus einer horizontalen Deckplatte 80, einer horizontalen Bodenplatte 81 und einem Ständer 82 als vertikales Segment des Rahmens 8. Im Rahmen 8 ist eine vertikale Gewindespindel 7 sowie eine Brühvorrichtung 9 mit einer Brühkammer 11 und einem Brühkolben 13 angeordnet. Der Brühkolben 13 hängt an der Deckplatte 80. Zwischen der Deckplatte 80 und der Bodenplatte 81 ist die Gewindespindel 7 drehbar gelagert. Sie ist mit einem nicht dargestellten Antrieb verbunden, zum Beispiel einem Elektromotor. Die Brühkammer 11 ist als zylindrischer Hohlkörper ausgebildet, in deren oberseitige Öffnung 12 der ebenfalls zylindrische Brühkolben 13 passt. Die Längsachse L der Brühkammer 11 verläuft daher in der abgebildeten Position koaxial zur Längsachse K des Brühkolbens 13.

Ein waagerechter Verbindungsarm 15 verbindet die Brühkammer 11 mit der Gewindespindel 7 als Spindelmutter. Er ist in einem oberen Bereich des Ständers 82 bis zu einer Verschwenkebene P gegen ein Mitdrehen auf der Spindel 7 vertikal geführt, wie es in der parallelen Anmeldung Nr. 201203693 des Anmelders vom selben Tage ausführlich dargestellt ist. Eine Linksdrehung der Gewindespindel 7 verfährt die Brühkammer 11 in einer Ausfahrrichtung G vom Brühkolben 13 aus abwärts, eine Rechtsdrehung verfährt die Brühkammer 11 in einer Einfahrrichtung H hin zum Brühkolben 13 bzw. aufwärts. In der waagerechten Verschwenkebene P angekommen, verschwenkt der Verbindungsarm 15 und damit die Brühkammer 11 mit der Rotation der Gewindespindel 7 um die Spindelachse A.

Ein flacher Haltering 18 um die Gewindespindel 7 liegt auf dem Verbindungsarm 15 auf und hält ein Abstreifelement 17, das unmittelbar oberhalb der Öffnung 12 der Brühkammer 11 liegt. Das Abstreifelement 17 und der Haltering 18 bilden gemeinsam eine Abstreifvorrichtung. Am Haltering 18 kragt eine Zahnstange 25 aus, der Verbindungsarm 15 trägt ebenfalls eine auskragende Zahnstange 23. Beide Zahnstangen 23, 25 weisen nach links zum Ständer 82 und wirken wie Abschnitte von horizontal liegenden Kronrädern. Zwischen und in Eingriff mit ihnen steht aufrecht ein Stirnrad 21, dessen Drehachse J senkrecht zur Spindelachse A liegt und im Ständer 82 vertikal verschiebbar gelagert ist. Das Stirnrad 21 dient zusammen mit den Zahnstangen 23, 25 als Koppelungseinrichtung zwischen der Brühkammer 11 und der Abstreifvorrichtung, insbesondere dem Abstreifelement 17.

In der Brühkammer 11 ist ein T-Kolben 30 mit einer waagrechten Kolbenscheibe 32 und einem senkrechten Schaft 31 angeordnet. Der Schaft 31 durchdringt einen Boden 25 der Brühkammer 11 und steht im Betrieb stets koaxial zur Brühkammerachse L. Der T-Kolben 30 dient zum Ausstoßen eines Tresterkuchens 19 aus der Brühkammer 11 und ist herkömmlich oder gemäß der Anmeldung Nr. 201203223 des Anmelders angetrieben. Das Abstreifelement 17 kann den Tresterkuchen 19 vom T-Kolben 30 in einer horizontalen Verschwenkebene B abstreifen.

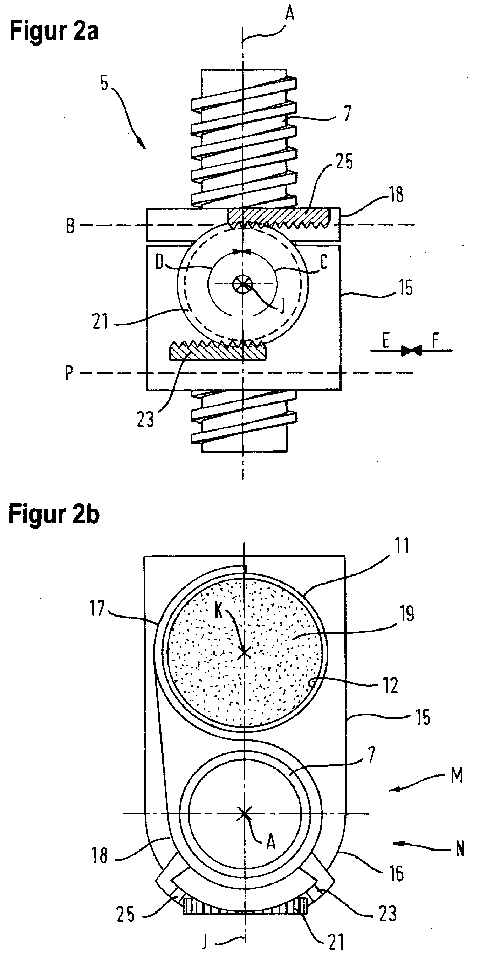

Figur 2a zeigt eine gegenüber Figur 1 um 90° gedrehte Teilansicht auf die Koppelungseinrichtung 21, 23, 25 in einer Position der Brühkammer 11 und des Abstreifelements 17 relativ zueinander, die sie während eines Brühvorgangs und eines Verfahrens der Brühkammer 11 einnehmen, und die Figur 2b eine Ansicht von oben. Auf einer Oberseite des Verbindungsarms 15 liegt der Haltering 18, dessen vertikale Außenkanten mit den Außenkanten des Verbindungsarms 15 fluchten. Der Verbindungsarm 15 trägt die Zahnstange 23, deren Zähne aufwärts, der Haltering 18 die Zahnstange 25, deren Zähne abwärts weisen. Das Stirnrad 21 kämmt mit den Zahnstangen 23, 25. Die Zahnstange 23 verschwenkt mit dem Verbindungsarm 15 in einer Verschwenkrichtung E bzw. in einer gegenläufigen Verschwenkrichtung F, die in einer horizontalen Verschwenkebene P liegen. Sie treibt das Stirnrad 21 in einer Drehrichtung C gegen den Uhrzeigersinn bzw. in einer Drehrichtung D im Uhrzeigersinn an. Das Stirnrad 21 liegt horizontal fest und treibt daher die Zahnstange 25 in der Verschwenkrichtung F bzw. E an. Das Abstreifelement 17 (siehe Figur 2b) verschwenkt mit der Zahnstange 25. Somit löst das Verschwenken der Brühkammer 11 unmittelbar ein gegenläufiges Verschwenken des Abstreifelements 17 aus.

Figur 2b als schematische Draufsicht auf die Abstreifvorrichtung verdeutlicht Lage und Form der in Figur 2a beschriebenen Elemente. Das Stirnrad 21 liegt auf einer Rückseite N des Verbindungsarms 15 und damit bezüglich der Spindel 7 der Brühkammer 11 und dem Abstreifer 17 gegenüber, die auf einer Vorderseite M des Verbindungsarms 15 liegen. Der Haltering 18 umschließt die Gewindespindel 7, ohne in ihr Gewinde einzugreifen. Er besitzt linksseitig einen Arm mit einer kreisbogenförmigen Kontur, der den Abstreifer 17 bildet. Der Abstreifer 17 umschließt einen Rand der kreisrunden Öffnung 12 der Brühkammer 11 als Halbring. In einem Bereich des Halterings 18 gegenüber dem Abstreifer 17 kragt die Zahnstange 25 aus, die sich segmentbogenförmig um ihn legt. Der Verbindungsarm 15 trägt an seiner Rückwand 16 die auskragende Zahnstange 23, die analog zur Zahnstange 25 segmentbogenförmig ausgebildet ist.

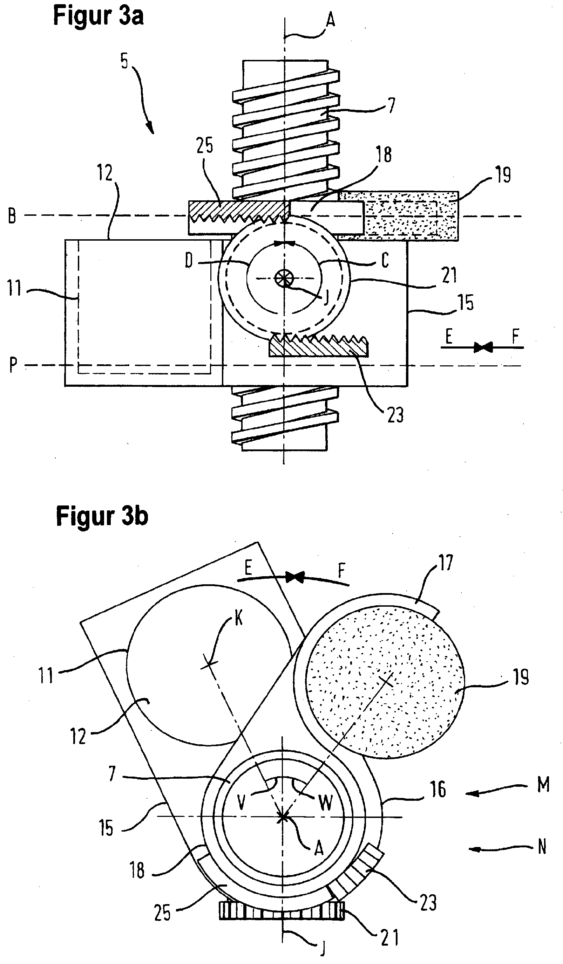

Zwischen Figur 2 und Figur 3 laufen folgende Prozesse ab: Eine Linksdrehung der Gewindespindel 7, d. h. eine Drehung gegen den Uhrzeigersinn (s. Figuren 2b und 3b), schwenkt die Brühkammer 11 nach links aus. Sie bewirkt ein Mitdrehen des Verbindungsarms 15 nach links in einer horizontalen Verschwenkrichtung F, die in der Verschwenkebene P liegt. Damit verschwenkt die Zahnstange 23 an der Rückwand 16 des Verbindungsarms 15 nach rechts. Die Zahnstange 23 treibt das Stirnrad 21 zu einer Drehung in Drehrichtung C entgegen dem Uhrzeigersinn (s. Figuren 2a und 3a) an. Das Stirnrad 21 wiederum treibt die Zahnstange 25 zu einem Verschwenken nach links an. Das Verschwenken der Zahnstange 25 führt zum Verschwenken des Halterings 18 und damit des Abstreifers 17 in der entgegen gesetzten Richtung E.

Figur 3 zeigt das Ergebnis der beschriebenen Bewegung. Der Tresterkuchen 19 wurde aus der Öffnung 12 aus der Brühkammer 11 ausgestoßen, vom Abstreifer 17 erfasst und von der Oberseite der Brühkammer 11 nach rechts abgestreift. Von dort fällt er neben der Brühkammer 11 abwärts in einen nicht dargestellten Tresterbehälter, der unterhalb der Verschwenkebene P der Brühkammer 11 steht. Die Brühkammer 11 und der Verbindungsarm 15 einerseits sowie der Abstreifer 17 und der Haltering 18 andererseits sind jetzt in einem maximalen Winkel von 60° gegeneinander und um die Spindelachse A verschwenkt. Die Winkel V, W, um die die Brühkammer 11 bzw. der Abstreifer 17 verschwenken, betragen folglich jeweils circa 30° relativ zur horizontal feststehenden Stirnradachse J.

Die Öffnung 12 der Brühkammer 11 liegt in dem ausgeschwenkten Zustand der Brühkammer 11 und des Abstreifelements 17 gemäß Figur 3 hin weitgehend frei. Jetzt kann die Brühkammer 11 mit frischem Kaffeepulver befüllt werden, beispielsweise ausgehend von einem darüber angeordneten Auslass für Kaffeepulver.

Eine Rechtsdrehung der Gewindespindel 7, d. h. eine Drehung im Uhrzeigersinn, bewirkt ein Mitdrehen des Verbindungsarms 15 nach rechts und damit ein gegenläufiges Einschwenken der Brühkammer 11 und des Abstreifelements 17. Das Einschwenken endet in einem Ausgangszustand gemäß Figur 2. In dieser Position kann ein neuer Brühvorgang beginnen.

Da es sich bei dem vorhergehenden detailliert beschriebenen Kaffeevollautomaten um ein Ausführungsbeispiel handelt, kann es vom Fachmann in üblicher Weise in einem weiten Umfang modifiziert werden, ohne den Bereich der Erfindung zu verlassen. Insbesondere können auch die beschriebenen Drehrichtungen gewechselt bzw. gespiegelt werden sowie die konkreten Ausgestaltungen der Koppelungseinrichtung in anderer Form als in der hier beschriebenen erfolgen. Ebenso kann der Abstreifer in einer anderen Form ausgestaltet sein, wenn dies aus Platzgründen bzw. designerischen Gründen notwendig ist. Der Gegenstand der Erfindung lässt sich zudem mit der Lehre der Anmeldung Nr. 201203223 des Anmelders vom selben Tage vorteilhaft kombinieren. Weiterhin schließt die Verwendung der unbestimmten Artikel "ein" bzw. "eine" nicht aus, dass die betreffenden Merkmale auch mehrmals bzw. mehrfach vorhanden sein können.

### Bezugszeichenliste

- 1: Kaffeevollautomat
- 3: Aufstandsfläche
- 5: Spindelbrüheinheit
- 6: Gehäuse
- 7: Gewindespindel
- 8: Aufnahmerahmen
- 9: Brühvorrichtung
- 11: Brühkammer
- 12: Öffnung
- 13: Kolben
- 15: Verbindungsarm
- 16: Rückwand
- 17: Abstreifer
- 18: Haltering
- 19: Tresterkuchen
- 21: Stirnrad
- 23, 25: Zahnstange
- 30: T-Kolben
- 31: Schaft
- 32: Deckel
- 80: Deckplatte
- 81: Bodenplatte
- 82: Ständer

- A: Spindelachse
- B: Verschwenkebene
- C, D: Rotationsrichtung
- E, F: Verschwenkrichtung
- G, H: Verfahrrichtung
- J: Stirnradachse
- K: Brühkolbenachse
- L: Brühkammerachse
- N: Rückseite
- M: Vorderseite
- P: Verschwenkebene
- V, W: Schwenkwinkel

## Patentansprüche

1. Kaffeevollautomat (1), umfassend eine Spindelbrüheinheit (5) mit einer Brühkammer (11, 15) und einer Gewindespindel (7) als Antrieb der Brühkammer (11, 15), wobei die Brühkammer (11) parallel zu einer Drehachse (A) der Gewindespindel (7) verfahrbar und um eine Drehachse (A) der Gewindespindel (7) verschwenkbar ist, und mit einer Abstreifvorrichtung (17, 18) zum Abstreifen eines Tresterkuchens (19) von der Brühkammer (11), **gekennzeichnet durch** Mittel (21, 23, 25) zu einem Abstreifen weitgehend zeitgleich zum Verschwenken der Brühkammer (11).

2. Kaffeevollautomat nach Anspruch 1, **dadurch gekennzeichnet, dass** die Abstreifvorrichtung relativ zur Verschwenkbewegung der Brühkammer (11) ortsfest angeordnet ist.

3. Kaffeevollautomat nach Anspruch 1, **dadurch gekennzeichnet, dass** die Abstreifvorrichtung (17, 18) separat antreibbar ausgebildet ist.

4. Kaffeevollautomat nach Anspruch 3, **dadurch gekennzeichnet, dass** die Abstreifvorrichtung (17, 18) in einer gegenläufigen Bewegung zur Verschwenkbewegung der Brühkammer (11) antreibbar ist.

5. Kaffeevollautomat nach Anspruch 3 oder 4, **dadurch gekennzeichnet, dass** die Abstreifvorrichtung (17, 18) an einer Oberseite der Brühkammer (11) angebracht ist.

6. Kaffeevollautomat nach Anspruch 3 bis 5, **gekennzeichnet durch** eine Koppelungseinrichtung (21, 23, 25), die das Verschwenken der Abstreifvorrichtung (17, 18) mit der Verschwenkbewegung der Brühkammer (11) koppelt.

7. Kaffeevollautomat nach Anspruch 3 bis 6, **gekennzeichnet durch** eine rotatorische Verschwenkbewegung der Abstreifvorrichtung (17, 18).

8. Kaffeevollautomat nach einem der Ansprüche 3 bis 7, **dadurch gekennzeichnet, dass** ein Schwenkwinkel der Brühkammer (11) und der Abstreifvorrichtung (17, 18) relativ zueinander mindestens 30°, vorzugsweise mindestens 40° und besonders bevorzugt mindestens 50° beträgt sowie höchstens 90°, vorzugsweise höchstens 80° und besonders bevorzugt höchstens 70°.

9. Kaffeevollautomat nach einem der Ansprüche 3 bis 8, **dadurch gekennzeichnet, dass** die Abstreifvorrichtung einen um die Spindel (7) gelegten Haltering (18) umfasst, der zum Verschwenken bzw. Rotieren antreibbar ausgebildet ist.

10. Kaffeevollautomat nach einem der Ansprüche 3 bis 9, **gekennzeichnet durch** ein Getriebe als Koppelungseinrichtung, das eine erste Zahnstange (23) an der Brühkammer (11) und eine zweite Zahnstange (25) an der Abstreifvorrichtung (17, 18) sowie ein Zahnrad (21) umfasst, das mit beiden Zahnstangen (23, 25) kämmt.

## Claims

1. Fully automatic coffee machine (1), comprising a spindle brewing unit (5) with a brewing chamber (11, 15) and a threaded spindle (7) as a drive of the brewing chamber (11, 15), wherein the brewing chamber (11) can be moved parallel to an axis of rotation (A) of the threaded spindle (7) and can be swivelled about an axis of rotation (A) of the threaded spindle (7), and with a scraper device (17, 18) for scraping a pomace cake (19) from the brewing chamber (11), **characterised by** means (21, 23, 25) for scraping largely simultaneously with the swivelling of the brewing chamber (11).

2. Fully automatic coffee machine according to claim 1, **characterised in that** the scraper device is arranged to be stationary relative to the swivelling movement of the brewing chamber (11).

3. Fully automatic coffee machine according to claim 1, **characterised in that** the scraper device (17, 18) is embodied so as to be driven separately.

4. Fully automatic coffee machine according to claim 3, **characterised in that** the scraper device (17, 18) can be driven in an opposing movement to the swivelling movement of the brewing chamber (11).

5. Fully automatic coffee machine according to claim 3 or 4, **characterised in that** the scraper device (17, 18) is mounted on an upper side of the brewing chamber (11).

6. Fully automatic coffee machine according to claims 3 to 5, **characterised by** a coupling device (21, 23, 25) which couples the swivelling of the scraper device (17, 18) to the swivelling movement of the brewing chamber (11).

7. Fully automatic coffee machine according to claims 3 to 6, **characterised by** a rotational swivelling movement of the scraper device (17, 18).

8. Fully automatic coffee machine according to one of the claims 3 to 7, **characterised in that** a swivel angle of the brewing chamber (11) and the scraper device (17, 18) in relation to each other is at least 30°, preferably at least 40° and particularly preferably at least 50° and at most 90°, preferably at most 80° and particularly preferably at most 70°.

9. Fully automatic coffee machine according to one of the claims 3 to 8, **characterised in that** the scraper device comprises a retainer ring (18) surrounding the spindle (7), which can be driven for swivelling and/or rotation.

10. Fully automatic coffee machine according to one of the claims 3 to 9, **characterised by** a gear as a coupling device, which comprises a first toothed rack (23) on the brewing chamber (11) and a second toothed rack (25) on the scraper device (17, 18) and a gearwheel (21) which meshes with the two toothed racks (23, 25).

## Revendications

1. Machine à café (1) entièrement automatique, comprenant une unité de percolation à tige (5) munie d'une chambre de percolation (11, 15) et d'une tige filetée (7) en tant qu'entraînement de la chambre de percolation (11, 15), la chambre de percolation (11) étant déplaçable parallèlement à un axe de rotation (A) de la tige filetée (7) et pivotante autour d'un axe de rotation (A) de la tige filetée (7), et comprenant un dispositif de raclage (17, 18) destiné à racler un marc de café (19) de la chambre de percolation (11), **caractérisée par** des moyens (21, 23, 25) destinés à racler largement en même temps que le pivotement de la chambre de percolation (11).

2. Machine à café entièrement automatique selon la revendication 1, **caractérisée en ce que** le dispositif de raclage est disposé de manière stationnaire par rapport au mouvement de pivotement de la chambre de percolation (11).

3. Machine à café entièrement automatique selon la revendication 1, **caractérisée en ce que** le dispositif de raclage (17, 18) est réalisé de manière à pouvoir être entraîné séparément.

4. Machine à café entièrement automatique selon la revendication 3, **caractérisée en ce que** le dispositif de raclage (17, 18) est entraînable dans un mouvement inverse au mouvement de pivotement de la chambre de percolation (11).

5. Machine à café entièrement automatique selon la revendication 3 ou 4, **caractérisée en ce que** le dispositif de raclage (17, 18) est placé sur un côté supérieur de la chambre de percolation (11).

6. Machine à café entièrement automatique selon les revendications 3 à 5, **caractérisée par** un dispositif de couplage (21, 23, 25) qui couple le pivotement du dispositif de raclage (17, 18) au mouvement de pivotement de la chambre de percolation (11).

7. Machine à café entièrement automatique selon les revendications 3 à 6, **caractérisée par** un mouvement de pivotement rotatif du dispositif de raclage (17, 18).

8. Machine à café entièrement automatique selon l'une quelconque des revendications 3 à 7, **caractérisée en ce qu'**un angle de pivotement de la chambre de percolation (11) et du dispositif de raclage (17, 18) l'un par rapport à l'autre est au moins de 30°, de préférence au moins de 40° et de manière particulièrement préférée au moins de 50° et au maximum de 90°, de préférence au maximum de 80° et de manière particulièrement préférée au maximum de 70°.

9. Machine à café entièrement automatique selon l'une quelconque des revendications 3 à 8, **caractérisée en ce que** le dispositif de raclage comprend une bague de retenue (18) posée autour de la tige (7), laquelle bague de retenue est réalisée de manière à pouvoir être entraînée pour pivoter resp. tourner.

10. Machine à café entièrement automatique selon l'une quelconque des revendications 3 à 9, **caractérisée par** un engrenage en tant que dispositif de couplage, lequel comprend une première crémaillère (23) sur la chambre de percolation (11) et une deuxième crémaillère (25) sur le dispositif de raclage (17, 18) ainsi qu'une roue dentée (21) qui racle à l'aide des deux crémaillères (23, 25).
